# EUROPEAN PATENT APPLICATION

(11) **EP 4 550 906 A1**
(43) Date of publication of application: **07.05.2025**
(21) Application number: 22948630.3
(22) Date of filing: 30.06.2022
(51) Int. Cl.: H04W 72/04, H04W 16/14

(54) **METHOD FOR OCCUPYING CHANNEL IN UNLICENSED FREQUENCY BAND, AND APPARATUS THEREFOR**

(71) Applicant: Beijing Xiaomi Mobile Software Co., Ltd., Beijing 100085 (CN)
(72) Inventor: ZHAO, Wensu, Beijing 100085 (CN); ZHAO, Qun, Beijing 100085 (CN)
(74) Representative: Stöckeler, Ferdinand
(86) International application number: PCT/CN2022/103164
(87) International publication number: WO 2024/000528

(57) **Abstract**

Disclosed in the embodiments of the present application are a method for occupying a channel in an unlicensed frequency band, and an apparatus therefor, which method and apparatus can be applied to systems such as Internet of Vehicles, V2X and V2V. The method comprises: before sending a physical sidelink control channel (PSCCH)/physical sidelink shared channel (PSSCH), a first terminal device occupying a channel by using cyclic prefix extension (CPE) and/or first information. By means of implementing the embodiments of the present application, a channel can be occupied in an unlicensed frequency band of a sidelink, such that a channel occupancy time (COT) not being interrupted is ensured, and the time delay of information sending of a communication device is reduced, thereby improving data transmission efficiency.

## Description

### TECHNICAL FIELD

The disclosure relates to the field of communication technologies, in particular to a method for occupying a channel in an unlicensed spectrum and an apparatus therefor.

### BACKGROUND

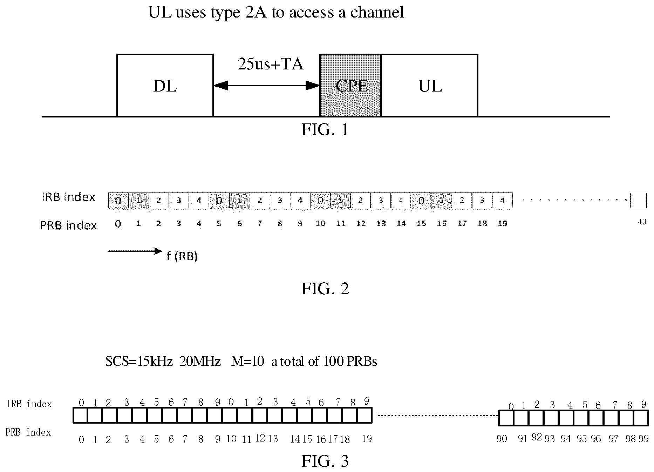

In a new radio unlicensed (NR-U) system, as illustrated in FIG. 1, when a downlink-to-uplink handover is required within a channel occupancy time (COT), a gap with a specific length is required to generate between the downlink-to-uplink handover. The gap is realized by a terminal that sends an uplink (UL) extending a cyclic prefix (CP) of a first symbol in the uplink, i.e., a cyclic prefix extension (CPE). The gap is configured to prevent a channel from being occupied by other system devices (such as WiFi) during an uplink-downlink handover, and a length of the CPE is usually less than a length of one orthogonal frequency division multiplexing (OFDM) symbol.

In a sidelink unlicensed (SL-U) system, because the SL-U system is a distributed system, there is no scheduling of a base station, a transmission time of the terminal is uncertain. When the terminal initiates one COT sharing with other terminals, there is a certain gap between transmissions of different terminals. If the gap is greater than 25us, it will lead to COT interruption, and the channel may be occupied by other system devices. Therefore, how to ensure that the COT is not interrupted has become an urgent problem to be solved.

### SUMMARY

Embodiments of the disclosure provide a method for occupying a channel in an unlicensed spectrum and an apparatus therefor, which may be applied to an internet of vehicle (IOV), such as a vehicle to everything (V2X) communication, a long term evolution-vehicle (LTE-V) among vehicles, and a vehicle to vehicle (V2V) communication, or may be applied to smart driving, intelligent connected vehicle and other fields. In a sidelink unlicensed (SL-U) system, a channel may be occupied by a cyclic prefix extension (CPE) and/or first information, so as to prevent a channel occupancy time (COT) from being interrupted, which reduces a delay for a communication device to send information, and improves a data transmission efficiency.

According to a first aspect of embodiments of the disclosure, a method for occupying a channel in an unlicensed spectrum is provided. The method is performed by a first terminal and includes:
before sending a physical sidelink control channel (PSCCH)/physical sidelink shared channel (PSSCH), occupying a channel by a cyclic prefix extension (CPE) and/or first information.

In this technical scheme, in the SL-U system, the CPE and/or the first information may be used to occupy the channel, so as to prevent the COT from being interrupted, which reduces the delay for a communication device to send information, and improves the data transmission efficiency.

In an implementation, occupying the channel by the CPE and/or the first information, includes:
determining a gap between a starting position of a PSCCH/PSSCH to be sent and an end position of a previous PSCCH/PSSCH; and
occupying a channel in a gap by a CPE defined in a new radio unlicensed (NR-U) system and/or the first information.

In a possible implementation, determining the gap between the starting position of the PSCCH/PSSCH to be sent and the end position of the previous PSCCH/PSSCH, includes:
determining a gap between a transmission end position of a PSCCH/PSSCH in a slot and a transmission starting position of a PSCCH/PSSCH in another slot next to the slot, wherein the PSCCH/PSSCH in the slot and the PSCCH/PSSCH in the other slot are both sent by the first terminal.

In an implementation, determining the gap between the starting position of the PSCCH/PSSCH to be sent and the end position of the previous PSCCH/PSSCH, includes:
determining a gap between a starting position of a PSCCH/PSSCH to be sent by the first terminal and an end position of a PSCCH/PSSCH sent by a second terminal, wherein the second terminal and the first terminal are different terminals that share the same COT.

In a possible implementation, occupying the channel in the gap by the CPE defined in the NR-U system and/or the first information, includes:
in response to the gap being less than a length of a target number of orthogonal frequency division multiplexing (OFDM) symbols, occupying the channel by the CPE or the first information; or
in response to the gap being equal to a length of a target number of OFDM symbols, occupying the channel by the first information; or
in response to the gap being greater than a length of a target number of OFDM symbols, occupying the channel by the CPE and the first information.

In a possible implementation, occupying the channel by the CPE and the first information, includes:
dividing the gap into a first gap and a second gap, wherein the first gap is less than the length of the target number of OFDM symbols, the second gap is greater than or equal to the length of the target number of OFDM symbols, and the second gap contains an integer number of OFDM symbols;
occupying the channel by the CPE defined in the NR-U system in the first gap; and
occupying the channel by sending the first information in the second gap.

In a possible implementation, the target number is 1.

In a possible implementation, the first information includes at least one of:
a demodulation reference signal (DMRS), a specific sequence, repeated data, or redundant data.

According to a second aspect of embodiments of the disclosure, a communication apparatus is provided. The communication apparatus has the ability to implement part or all of the functions of the terminal in the method described in the first aspect. For example, the communication apparatus may have functions of some or all of the embodiments of the disclosure, or may have a function of independently implementing any embodiment of the disclosure. The functions may be implemented by hardware, or may be implemented by executing corresponding software using the hardware. The hardware or the software includes one or more units or modules corresponding to the above functions.

In an implementation, the communication apparatus includes: a transceiver module and a processing module. The processing module is configured to support the communication apparatus to perform corresponding functions in the above method. The transceiver module is configured to support communication between the communication apparatus and other devices. The communication apparatus may further include a storage module coupled to the transceiver module and the processing module, and the storage module is configured to store necessary computer programs and data for the communication apparatus.

As an example, the processing module may be a processor. The transceiver module may be a transceiver or a communication interface. The storage module may be a memory.

According to a third aspect of embodiments of the disclosure, another communication apparatus is provided. The communication apparatus includes: a processor. When the processor calls computer programs stored in a memory, the method described in the first aspect above is implemented.

According to a fourth aspect of embodiments of the disclosure, a communication apparatus is provided. The communication apparatus includes: a processor and a memory having computer programs stored thereon. When the processor executes the computer programs stored in the memory, the communication apparatus is caused to implement the method described in the first aspect above.

According to a fifth aspect of embodiments of the disclosure, a communication apparatus is provided. The communication apparatus includes: a processor and an interface circuit. The interface circuit is configured to receive code instructions and transmit the code instructions to the processor. The processor is configured to run the code instructions to cause the apparatus to perform the method described in the first aspect above.

According to a sixth aspect of embodiments of the disclosure, a computer-readable storage medium is provided. The computer-readable storage medium is configured to store instructions used by the above terminal. When the instructions are executed, the terminal is caused to implement the method of the first aspect.

According to a seventh aspect of embodiments of the disclosure, a computer program product including computer programs is provided. When the computer programs are run by a computer, the computer is caused to implement the method of the first aspect.

According to an eighth aspect of embodiments of the disclosure, a chip system is provided. The chip system includes at least one processor and an interface for supporting the terminal in realizing the functions involved in the first aspect, e.g., determining or processing at least one of data or information involved in the method described above. In a possible design, the chip system further includes a memory. The memory is configured to store necessary computer programs and data of the terminal. The chip system may consist of chips or may include a chip and other discrete components.

According to a ninth aspect of embodiments of the disclosure, a computer program is provided. When the computer program is run by a computer, the computer is caused to implement the method of the first aspect.

### BRIEF DESCRIPTION OF THE DRAWINGS

In order to clearly illustrate technical solutions of embodiments of the disclosure or background technologies, a description of drawings used in the embodiments of the disclosure or the background technologies is given below.
FIG. 1 is a communication diagram during performing a downlink-to-uplink handover within a channel occupancy time (COT) in a new radio unlicensed (NR-U) system.
FIG. 2 is a first schematic diagram of an interlaced resource block (IRB) according to an embodiment of the disclosure.
FIG. 3 is a second schematic diagram of the IRB according to an embodiment of the disclosure.
FIG. 4 is an example diagram of a relationship between an RB set and an IRB index according to an embodiment of the disclosure.
FIG. 5 is a flowchart of a method for occupying a channel in an unlicensed spectrum according to an embodiment of the disclosure.
FIG. 6 is a flowchart of another method for occupying a channel in an unlicensed spectrum according to an embodiment of the disclosure.
FIG. 7 is an example diagram of a channel occupation mode according to an embodiment of the disclosure.
FIG. 8 is an example diagram of another channel occupation mode according to an embodiment of the disclosure.
FIG. 9 is an example diagram of yet another channel occupation mode according to an embodiment of the disclosure.
FIG. 10 is a schematic diagram of a communication apparatus according to an embodiment of the disclosure.
FIG. 11 is a schematic diagram of another communication device according to an embodiment of the disclosure.
FIG. 12 is a schematic diagram of a chip according to an embodiment of the disclosure.

### DETAILED DESCRIPTION

Embodiments of the disclosure will be described in detail, examples of which are illustrated in the accompanying drawings, in which the same or similar reference numerals indicate the same or similar elements or elements having the same or similar functions throughout. The embodiments described below with reference to the accompanying drawings are exemplary and are intended to explain the disclosure, but not to be construed as limiting the disclosure. In the description of this disclosure, unless otherwise specified, "/" means "or". For example, A/B means A or B. Moreover, in this disclosure, "and/or" only describes possible relationships between associated objects, which indicates three kinds of relationships. For example, A and/or B means that A exists alone, A and B both exist, and B exists alone.

For easy understanding, terms involved in this disclosure are introduced first.

### 1. Channel occupancy time (COT) sharing

The COT sharing means that a terminal accesses a channel by a type1 listening before talking (LBT) mode, and occupies M slots of the channel. That is, the terminal initiates COT sharing with a length of M. The terminal uses the COT for its own data transmission, and may also share the remaining time in this COT with other terminals for a data transmission of the other terminals.

### 2. Interlaced resource block (IRB)

The IRB is introduced in a new radio unlicensed (NR-U) system. For example, two consecutive available IRBs are separated by M resource blocks (RBs). For an IRB index m, it includes physical resource blocks (PRBs) {*m, M+m,* 2*M+m,* 3*M+,* ... }, where *m* ∈ {0,1,...,*M*-1}. In the NR-U system, the structure of IRB is defined for two kinds of subcarrier spaces (SCSs) of 15kHz and 30kHz respectively, as shown in the following table.

**Table 4.4.4.6-1: Number of IRBs**

| *µ* | *M* |
|---|---|
| 0 | 10 |
| 1 | 5 |

For example, as illustrated in FIG. 2, when SCS=30khz and M=5, there are 5 IRB indexes. For one IRB index, for example, the IRB index is 0, the IRBs included in the IRB index is PRBs{0, 5, 10, 15, 20, 25, 30, 35, 40, 45}. For another example, as illustrated in FIG. 3, when SCS=15khz and M=10, there are a total of 10 IRB indexes, and thus there are 100 PRBs. For one IRB index, for example, the IRB index is 0, the IRBs included in the IRB index is PRBs {0,10,20,30,40,50,60,70,80,90}. The disclosure continues to introduce the IRB, and by introducing the IRB, an overhead of indicating frequency domain resources to be configured in a sidelink unlicensed (SL-U) system may be reduced.

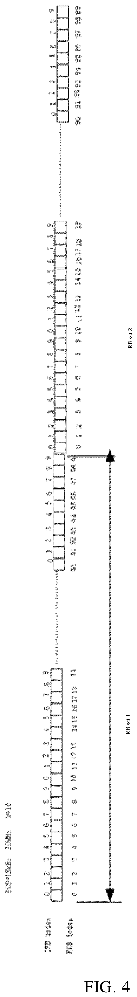

It should also be noted that the relationship between the IRB and an RB set is provided as follows. In the NR-U system, one LBT sub-band, namely 20MHZ, is collectively referred to as the RB-Set, and the entire carrier bandwidth is divided into several RB sets. The network maps the RB sets to a bandwidth part (BWP) by configuring the BWP. The protocol stipulates that the BWP configured by the network must contain an integer number of RB sets. As illustrated in FIG. 4, the relationship between the RB set and the IRB index is provided, and one RB set contains a plurality of IRB indexes.

It is understood that in the NR-U system, as illustrated in FIG. 1, when the downlink-to-uplink handover is required within one COT, a gap with a specific length is required to generate between the downlink-to-uplink handover. The gap is realized by a terminal that sends an uplink (UL) extending a cyclic prefix (CP) of a first symbol in the uplink, i.e., a cyclic prefix extension (CPE). In the NR-U system, a length of the CPE is usually less than a length of one orthogonal frequency division multiplexing (OFDM) symbol.

However, in the SL-U system, because the SL-U system is a distributed system, there is no scheduling of a base station, a time for the terminal to transmit data is uncertain. Therefore, how to ensure that COT is not interrupted has become an urgent problem to be solved.

In order to solve this problem, the disclosure provides a method for occupying a channel in an unlicensed spectrum and an apparatus, which may ensure that the COT will not be interrupted when other UEs share the COT, reduce a delay of information transmission of a communication apparatus, and improve a data transmission efficiency. In order to better understand a method for occupying a channel in an unlicensed spectrum disclosed in the embodiments of the disclosure, a terminal to which the embodiments of the disclosure are applicable will be described below first.

It should be noted that the method for occupying a channel in an unlicensed spectrum in the embodiments of the disclosure is applicable into the SL-U system. A sidelink in this disclosure may also be called a side link, a direct link or a direct communication. The terminal in the embodiments of the disclosure is an entity on a user side for receiving or transmitting signals, such as a mobile phone. The terminal may also be referred to as a terminal, a user equipment (UE), a mobile station (MS), a mobile terminal (MT), and the like. The terminal may be a car with communication functions, a smart car, a mobile phone, a wearable device, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in the embodiments of the disclosure. A first terminal mentioned in the embodiments of the disclosure may refer to a terminal, and a second terminal may refer to another terminal.

A method for occupying a channel in an unlicensed spectrum and an apparatus provided by this disclosure are introduced in detail in combination with the accompanying drawings.

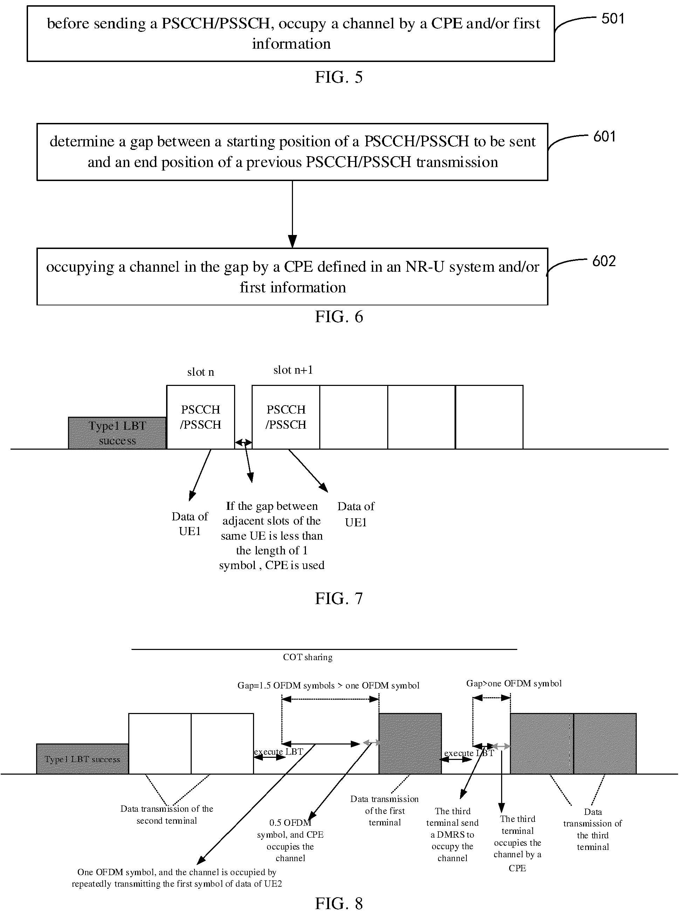

As illustrated in FIG. 5, FIG. 5 is a flowchart of a method for occupying a channel in an unlicensed spectrum according to an embodiment of the disclosure. It should be noted that the method for occupying the channel in the unlicensed spectrum in this embodiment of this disclosure may be executed by a first terminal, which means that the method for occupying the channel in the unlicensed spectrum in this embodiment of this disclosure is described from a side of the first terminal. As illustrated in FIG. 5, the method for occupying the channel in the unlicensed spectrum may include but is not limited to the following steps.

At step 501, before sending a physical sidelink control channel (PSCCH)/physical sidelink shared channel (PSSCH), a channel is occupied by a CPE and/or first information.

In an implementation, before sending the PSCCH/PSSCH by the first terminal, the first terminal may occupy the channel by the CPE.

It should be noted that this embodiment of the disclosure is described by taking the first terminal as a sending terminal. For other devices, such as a receiving terminal that receives this transmission, this technical scheme may be executed correspondingly.

In another implementation, the first terminal may occupy the channel by sending the first information before sending the PSCCH/PSSCH. In some embodiments of the disclosure, the first information may include, but is not limited to, at least one of: a demodulation reference signal (DMRS), a specific sequence, repeated data, or redundant data.

In another implementation, before sending the PSCCH/PSSCH by the first terminal, the first terminal may occupy the channel by the CPE and the first information.

In some embodiments of the disclosure, the CPE may be a CPE defined in the NR-U system. A length of the CPE may be a length of the CPE specified by the NR-U system. For example, the length of the CPE is less than a length of one OFDM symbol. In other embodiments of the disclosure, the CPE may be predefined by the terminal and a network side device, or the CPE may be agreed upon by a protocol.

By implementing this embodiment of the disclosure, in the SL-U system, the channel may be occupied by the CPE and/or the first information, so as to ensure that the COT is not interrupted, reduce a delay of information transmission of a communication device, and improve a data transmission efficiency.

It should be noted that in the SL-U system, the way for occupying the channel is related to whether the COT is shared and the above gap. The gap may be understood as a gap between a starting position of a PSCCH/PSSCH to be sent and an end position of a PSCCH/PSSCH transmitted in the previous slot, which will be introduced below in combination with the embodiments.

As illustrated in FIG. 6, FIG. 6 is a flowchart of another method for occupying a channel in an unlicensed spectrum according to an embodiment of the disclosure. It should be noted that this method for occupying the channel in the unlicensed spectrum in this embodiment of this disclosure may be executed by a first terminal, which means that this method for occupying the channel in the unlicensed spectrum in this embodiment of this disclosure is described from a side of the first terminal. As illustrated in FIG. 6, the method for occupying the channel in the unlicensed spectrum may include but is not limited to the following steps.

At step 601, a gap between a starting position of a PSCCH/PSSCH to be sent and an end position of a previous PSCCH/PSSCH is determined.

In a possible implementation, the end position of the previous PSCCH/PSSCH and the starting position of the PSCCH/PSSCH to be sent may be determined, and then the gap between the two transmissions may be determined accordingly.

In an implementation, in a case where the PSCCH/PSSCH to be sent and the previous PSCCH/PSSCH may be transmitted in different slots, a gap between a starting position of the PSCCH/PSSCH to be sent and an end position of the PSCCH/PSSCH transmitted in a previous slot may be determined. In a possible implementation, a gap between a transmission end position of a PSCCH/PSSCH in a slot and a transmission starting position of a PSCCH/PSSCH in another slot next to the slot may be determined. The PSCCH/PSSCH in the previous slot and the PSCCH/PSSCH in the other slot are both transmitted by the first terminal.

In another implementation, in a case where the PSCCH/PSSCH to be sent and the previous PSCCH/PSSCH are transmitted in the same slot, the gap between the starting position of the PSCCH/PSSCH to be sent and the end position of the previous PSCCH/PSSCH may be determined. For example, in a certain slot, the first three OFDM symbols transmit a PSCCH/PSSCH, and the sixth OFDM symbol in this slot starts to transmit a PSCCH/PSSCH to be sent currently, so it may be determined that the gap between the starting position of the PSCCH/PSSCH to be sent and the end position of the previous PSCCH/PSSCH has a length of 2 OFDM symbols.

In some embodiments of the disclosure, the PSCCH/PSSCH to be sent and the previous PSCCH/PSSCH may be transmitted by the same terminal (e.g., the first terminal), that is, the PSCCH/PSSCH to be sent and the previous PSCCH/PSSCH are both transmitted by the first terminal. In other embodiments of the disclosure, the PSCCH/PSSCH to be sent and the previous PSCCH/PSSCH may be transmitted by different terminals. For example, the PSCCH/PSSCH to be sent is transmitted by the first terminal, and the previous PSCCH/PSSCH is transmitted by a second terminal. The first terminal and the second terminal are different terminals sharing the same COT.

At step 602, a placeholder for occupying a channel is sent on the gap.

It should be noted that the placeholder may be any form of transmission, and the specific form of the placeholder is not limited in this disclosure. It should be considered that any transmission that may occupy the channel may be called the placeholder. In an implementation, the placeholder for occupying a channel may occupy the channel by the CPE defined in the NR-U system and/or the first information. That is, the CPE defined in the NR-U system may be reused as the placeholder, or the first information may be used as the placeholder, or the CPE and the first information may be used together as the placeholder. Certainly, any other form of transmission may be used as the placeholder, which is not limited in the embodiment of the disclosure.

Optionally, the placeholder for occupying the channel may be determined according to a size of the gap. The placeholder may be the CPE and/or the first information.

Optionally, different occupation modes are adopted to occupy the channel due to different sizes of the gaps.

In a possible implementation, regardless of whether the first terminal shares the same COT with other terminals, if the gap is less than a length of a target number of OFDM symbols, the channel is occupied by the CPE defined in the NR-U system or the first information. That is, in a case where the first terminal shares the same COT with other terminals, or the first terminal does not share the same COT with other terminals, if the gap is less than the length of the target number of OFDM symbols, the channel may be occupied by the CPE defined in the NR-U system or by sending the first information. As an example, the target number may be any number. For example, the target number may be 1, a number less than 1, or a number greater than 1, that is, a length of the gap may be less than, equal to or greater than the length of one OFDM symbol.

For example, if the first terminal does not share the same COT with other terminals, that is, for the same UE (e.g., the first terminal), the transmission end position of the PSCCH/PSSCH sent by the first terminal in the slot and the transmission starting position of the PSCCH/PSSCH to be sent by the first terminal in the other slot next to the slot may be determined, and then the gap between the transmission end position of the PSCCH/PSSCH sent in the slot and the transmission starting position of the PSCCH/PSSCH to be sent in the other slot next to the slot may be determined. For example, after a success of the LBT, the first terminal (such as a UE1) starts to transmit data in a slot n, and the UE1 transmits data in a slot n+1. Then the gap of the UE1 between the transmission end position of the PSCCH/PSSCH in the slot and the transmission starting position of the PSCCH/PSSCH in the other slot next to the slot may be determined. If the gap is less than the length of one OFDM symbol, the first terminal may occupy the channel by the CPE defined in the NR-U system, and start the transmission of PSCCH/PSSCH until reaching a transmission position of the PSCCH/PSSCH in the slot n+1.

For example, as illustrated in FIG. 7, by taking the first terminal as the UE1 as an example, the UE1 starts to transmit data in the slot n after success of the LBT, and the UE1 transmits data in the slot n+1. Because when transmitting data in slots, the last symbol in the slot is usually used as a guard symbol, and the PSSCH is not transmitted in this guard symbol, so as to eliminate inter-symbol interference to the maximum extent. That is, the end position of the PSCCH/PSSCH transmitted by the UE1 in the slot n is the penultimate symbol in the slot n, and the UE1 starts to transmit the PSCCH/PSSCH at the first symbol in the slot n+1. Therefore, the gap between the end position of the PSCCH/PSSCH transmitted by the UE1 in the slot n and the starting position of the PSCCH/PSSCH to be sent in the slot n+1 is less than the guard symbol, and it may be determined that the gap between the end position of the PSCCH/PSSCH transmitted by the UE1 in the slot n and the starting position of the PSCCH/PSSCH to be sent in the slot n+1 is less than the length of one OFDM symbol (so at this time, the gap=1 symbol-LBT time). In this case, the CPE defined in the NR-U system or the first information may be used to occupy the channel, and the PSCCH/PSSCH starts to be sent until reaching the transmission position of the PSCCH/PSSCH in the slot n+1.

In another possible implementation, regardless of whether the first terminal shares the same COT with other terminals, if the gap is equal to the length of the target number of OFDM symbols, the channel is occupied by sending the first information. That is, in a case where the first terminal shares the same COT with other terminals, or the first terminal dose not share the same COT with other terminals, the channel may be occupied by sending the first information when the gap is equal to the length of the target number of OFDM symbols.

In some embodiments of the disclosure, the first information may include, but is not limited to, at least one of: a DMRS, a specific sequence, repeated data, or redundant data. The target number may be 1. For example, if the first terminal does not share the COT with other terminals, that is, a single UE transmits data in adjacent slots, and there is a gap between transmissions in adjacent slots, and the gap is equal to the length of the target number of OFDM symbols, the first terminal may occupy the channel in at least one of the following ways:
1) sending a DMRS;
2) sending a specific sequence (for example, a sequence consisting of only 1, or a similar sequence);
3) sending repeated data, for example, repeatedly transmitting data in the gap, in which the data is data in the PSCCH/PSSCH to be sent by the UE (such as the first terminal in the embodiments of the disclosure), such as data in L OFDM symbols in one slot,; or
4) sending redundant data, for example, sending redundant repeated data in the gap.

In yet another possible implementation, regardless of whether the first terminal shares the same COT with other terminals, if the gap is greater than the length of the target number of OFDM symbols, the CPE defined in the NR-U system and the first information are adopted as placeholders. That is, in a case where the first terminal shares the same COT with other terminals, or in a case where the first terminal does not share the same COT with other terminals, if the gap is greater than the length of the target number of OFDM symbols, the channel may, according to the gap, be occupied by the CPE defined in the NR-U system and the first information.

As an example of a possible implementation, a gap may be divided into a first gap and a second gap, in which the first gap is less than the length of the target number of OFDM symbols, the second gap is greater than or equal to the length of the target number of OFDM symbols, and the second gap contains an integer number of OFDM symbols. The channel is occupied with the CPE defined in the NR-U system in the first gap, and the channel is occupied by sending the first information in the second gap. In some embodiments of the disclosure, the first information includes but is not limited to at least one of: a DMRS, a specific sequence, repeated data, or redundant data. The target number of OFDM symbols may be one OFDM symbol.

For example, in the COT sharing, for different terminals (e.g., the first terminal and the second terminal), if it is determined that a gap (where a time for executing a corresponding type of LBT is subtracted from the gap) between a starting position of a PSCCH/PSSCH to be sent by the first terminal and an end position of a PSCCH/PSSCH sent by the second terminal is greater than the length of one OFDM symbol, the gap may be divided into two portions, namely, a first gap (gap 1) and a second gap (gap 2). The gap 1 is less than the length of one OFDM symbol and the gap 1 is the length of a non-integer number of OFDM symbols, and in the gap 1, the CPE defined in the NR-U system is used to occupy a channel. For the gap 2, the gap 2 is greater than or equal to the length of one OFDM symbol and the gap 2 contains an integer number of OFDM symbols, and in the gap 2, a channel may be occupied by the UE (i.e., the first terminal in the embodiments of the disclosure) by at least one of the following ways:
1) sending a DMRS;
2) sending a specific sequence;
3) sending repeated data, for example, repeatedly transmitting data in the gap 2, in which the data is data in the PSCCH/PSSCH to be sent by the UE (such as the first terminal in the embodiments of the disclosure), such as data in L OFDM symbols in one slot; or
4) sending redundant data, for example, sending redundant repeated data in the gap 2.

For example, as illustrated in FIG. 8, if a gap (after subtracting a time for executing the LBT from the gap) between an end position of a PSCCH/PSSCH sent by the second terminal and a starting position of a PSCCH/PSSCH of the first terminal is greater than the length of one OFDM symbol, for example, the gap is the length of 1.5 OFDM symbols. The CPE with a length of 0.5 OFDM symbol is used to occupy a channel, and the channel is occupied by repeatedly sending the first symbol in the PSCCH/PSSCH of the first terminal using the length of 1 OFDM symbol.

For example, in a non-COT sharing, for the transmission in adjacent slots by the same UE (e.g., the aforementioned first terminal), because a physical sidelink feedback channel (PSFCH) resource configured in the previous slot is not configured to send a hybrid automatic repeat request (HARQ), so that a gap between a transmission end position of a PSCCH/PSSCH in a slot and a transmission starting position of a PSCCH/PSSCH in another slot next to the slot is greater than the length of one OFDM symbol. In this case, the gap may be divided into two portions, namely a first gap (gap 1) and a second gap (gap 2). The gap 1 is less than the length of one OFDM symbol and the gap 1 is the length of a non-integer number of OFDM symbols, and the CPE defined in the NR-U system is used to occupy a channel in the gap 1. For the gap 2, the gap 2 is greater than or equal to the length of one OFDM symbol and the gap 2 contains an integer number of OFDM symbols, and a channel may be occupied by the UE (i.e., the first terminal in the embodiments of the disclosure) in the gap 2 by at least one of the following ways:
1) sending a DMRS;
2) sending a specific sequence (for example, a sequence consisting of only 1, or a similar sequence);
3) sending repeated data, for example, repeatedly transmitting data in the gap 2, in which the data is data in the PSCCH/PSSCH to be sent by the UE (such as the first terminal in the embodiments of the disclosure), such as data in L OFDM symbols in one slot; or
4) sending redundant data, for example, sending redundant repeated data in the gap 2.

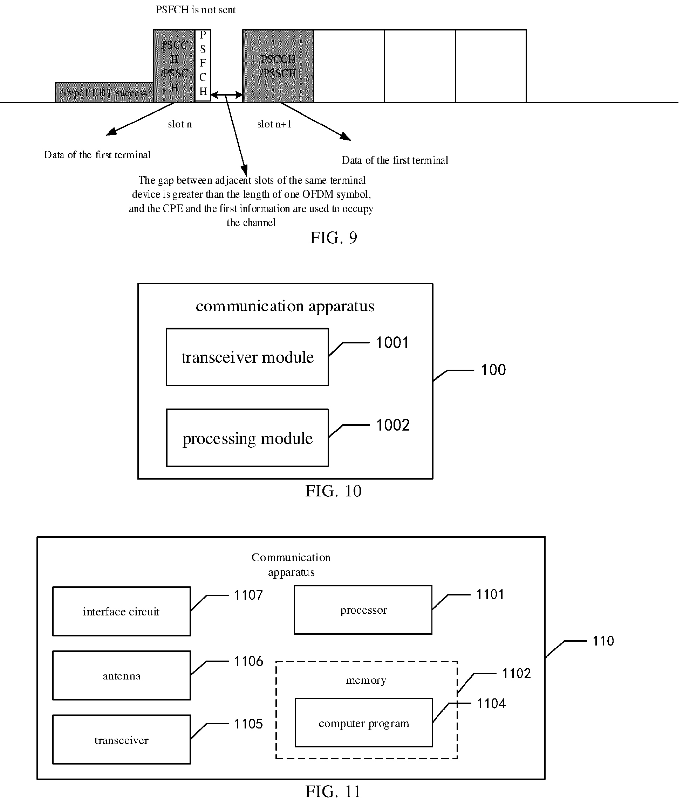

For example, as illustrated in FIG. 9, in a slot n, the first terminal sends a PSCCH/PSSCH, but a PSFCH is not configured to send a HARQ in the slot n. The PSFCH occupies 3 OFDM symbols, and the last OFDM symbol in the PSCCH/PSSCH in the slot n is a guard symbol, so an end position of the PSCCH/PSSCH sent by the first terminal in the slot n is separated from a starting position of the PSCCH/PSSCH in a slot n+1 by a length of 4 OFDM symbols. The first terminal sends the CPE and the first information before the first symbol of the PSCCH/PSSCH in the slot n+1 to occupy a channel.

It should be noted that the length of the CPE defined in the NR-U system may be less than the length of one OFDM symbol. Therefore, in an implementation of the disclosure, if the length of the target number of OFDM symbols is less than the length of one OFDM symbol, the CPE may be used. Certainly, any form of transmission may be used, such as the first information in the embodiments of this disclosure, which is only example illustrated herein and not limited in the embodiments of the disclosure. If the length of the target number of OFDM symbols is equal to or greater than the length of one OFDM symbol, the first information or any other form of message may be used, or the CPE may be used together with the first information or any other form of message.

It should be noted that the length of the CPE defined in the NR-U system may be determined based on a channel access type indicated by a network-side device.

According to the embodiments of the disclosure, the CPE and/or the first information may be configured to occupy the channel according to the gap between the starting position of the PSCCH/PSSCH to be sent and the end position of the previous PSCCH/PSSCH. That is, the channel may be occupied in different ways depending on the size of the gap, which may ensure that the COT will not be interrupted, reduce the delay of information transmission by the communication device and improves the data transmission efficiency.

It should be noted that in some embodiments of this disclosure, since the first terminal occupies the channel by sending the CPE and/or the first information, it is necessary to specify a frequency-domain bandwidth occupied by the CPE and the first information. In an implementation, the frequency-domain bandwidth occupied by the CPE and the first information is the same as the frequency band occupied by the PSCCH, which may be, for example, a frequency band of one LBT subband or a plurality of LBT subbands, or a subset of IRB indexes contained in one LBT subband.

In another implementation, the frequency-domain bandwidth occupied by the CPE and the first information is one common IRB index, which is pre-configured. The one common IRB index may contain one IRB index or a plurality of IRB indexes.

It should be noted that in this embodiment, step 601 and step 602 are only written together for illustration. For those skilled in the art, it is understood that step 601 and step 602 may be implemented separately or in combination, which is not limited in the embodiment of the disclosure.

It should also be noted that the technical scheme of the disclosure may be applied to the transmission scenario of a single UE between two adjacent slots and the transmission scenario of a plurality of UEs sharing the same COT.

In the above-mentioned embodiments of the disclosure, the method provided by the embodiments of the disclosure is introduced from the perspective of the first terminal. In order to realize the functions in the method provided by the embodiments of the disclosure, the first terminal may include a hardware structure and/or a software module, to realize the above functions in the form of the hardware structure, the software module, or the hardware structure plus the software module. A certain function of the above functions may be implemented by a hardware structure, a software module, or a combination of a hardware structure and a software module.

As illustrated in FIG. 10, FIG. 10 is a schematic diagram of a communication apparatus 100 according to an embodiment of the disclosure. The communication apparatus 100 shown in FIG. 10 may include a transceiver module 1001 and a processing module 1002. The transceiver module 1001 may include a sending module and/or a receiving module. The sending module is configured for realizing a sending function, and the receiving module is configured for realizing a receiving function. The transceiver module 1001 may realize the sending function and/or the receiving function.

The communication apparatus 100 may be a terminal (e.g., the first terminal in the aforementioned method embodiments), an apparatus in the terminal, or an apparatus that may be used together with the terminal.

If the communication apparatus 100 is a terminal (e.g., the first terminal in the aforementioned method embodiments), the transceiver module 1001 is configured to send a PSCCH/PSSCH, and the processing module 1002 is configured to, before sending the PSCCH/PSSCH, occupy a channel by a CPE and/or first information.

In an implementation, the processing module 1002 is configured to occupy the channel by the CPE and/or first information by: determining a gap between a starting position of a PSCCH/PSSCH to be sent and an end position of a previous PSCCH/PSSCH; and occupying a channel in the gap by a CPE defined in a NR-U system and/or the first information.

In an implementation, the processing module 1002 is configured to determine the gap between the starting position of the PSCCH/PSSCH to be sent and the end position of the previous PSCCH/PSSCH by: determining a gap between a transmission end position of a PSCCH/PSSCH in a slot and a transmission starting position of a PSCCH/PSSCH in another slot next to the slot, in which the PSCCH/PSSCH of the slot and the PSCCH/PSSCH in the other slot next to the slot are both sent by the first terminal.

In another possible implementation, the processing module 1002 is configured to determine the gap between the starting position of the PSCCH/PSSCH to be sent and the end position of the previous PSCCH/PSSCH by: determining a gap between a starting position of a PSCCH/PSSCH to be sent by the first terminal and an end position of a PSCCH/PSSCH sent by a second terminal, in which the second terminal and the first terminal are different terminals that share the same COT.

In an optional implementation, the processing module 1002 is configured to occupy the channel by the CPE defined in the NR-U system and/or the first information in the gap by: in response to the gap being less than a length of a target number of OFDM symbols, occupying a channel by the CPE or the first information; or in response to the gap being equal to the length of the target number of OFDM symbols, occupying a channel by the first information; or in response to the gap being greater than the length of the target number of OFDM symbols, occupying a channel by the CPE and the first information.

In an optional implementation, the processing module 1002 is configured to occupy the channel by the CPE and the first information by: dividing the gap into a first gap and a second gap, in which the first gap is less than the length of the target number of OFDM symbols, the second gap is greater than or equal to the length of the target number of OFDM symbols, and the second gap contains an integer number of OFDM symbols; occupying the channel by the CPE defined in the NR-U system in the first gap; and occupying the channel by sending the first information in the second gap.

In an optional implementation, the target number is 1.

In an optional implementation, the first information includes at least one of: a DMRS, a specific sequence, repeated data, or redundant data.

With regard to the apparatus in the above embodiments, the specific way in which each module performs operations has been described in detail in the method embodiments, and will not be described in detail here.

As illustrated in FIG. 11, FIG. 11 is a schematic diagram of another communication apparatus 110 according to an embodiment of the disclosure. The communication apparatus 110 may be a terminal (e.g., the first terminal in the above method embodiments), or a chip, a chip system or a processor that supports the terminal to realize the above-described methods. The apparatus may be configured to realize the methods described in the above method embodiments with reference to the description of the above-described method embodiments.

The communication apparatus 110 may include one or more processors 1101. The processor 1101 may be a general purpose processor or a dedicated processor, such as, a baseband processor or a central processor. The baseband processor may be configured for processing communication protocols and communication data. The central processor may be configured for controlling the communication apparatus (e.g., a base station, a baseband chip, a terminal, a terminal chip, a central unit (CU) or a distributed unit (DU)), executing computer programs, and processing data of the computer programs.

Optionally, the communication apparatus 110 may include one or more memories 1102 on which a computer program 1104 may be stored. The processor 1101 executes the computer program 1104 to cause the communication apparatus 110 to perform the methods described in the above method embodiments. Optionally, data may also be stored in the memory 1102. The communication apparatus 110 and the memory 1102 may be provided separately or may be integrated together.

Optionally, the communication apparatus 110 may also include a transceiver 1105 and an antenna 1106. The transceiver 1105 may be referred to as a transceiver unit, a transceiver machine, or a transceiver circuit, for realizing the transceiver function. The transceiver 1105 may include a receiver and a transmitter. The receiver may be referred to as a receiver machine or a receiving circuit, for realizing the receiving function. The transmitter may be referred to as a transmitter machine or a transmitting circuit, for realizing the transmitting function.

Optionally, the communication apparatus 110 may also include one or more interface circuits 1107. The interface circuits 1107 are be configured to receive code instructions and transmit the code instructions to the processor 1101. The processor 1101 runs the code instructions to cause the communication apparatus 110 to perform the method described in the method embodiments.

If the communication apparatus 110 is a terminal (e.g., the first terminal in the aforementioned method embodiments), the processor 1101 is configured to execute step 501 in FIG. 5, and steps 601 and 602 in FIG. 6. The transceiver 1105 is configured to perform the step of "sending the PSCCH/PSSCH".

In an implementation, the processor 1101 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be configured for code/data reading and writing, or may be configured for signal transmission or delivery.

In an implementation, the processor 1101 may store a computer program 1103. When the processor 1101 runs the computer program 1103, the communication apparatus 110 is caused to execute the method described in the above method embodiments. The computer program 1103 may be solidified in the processor 1101, in which case, the processor 1101 may be implemented by hardware.

In an implementation, the communication apparatus 110 may include circuits. The circuits may implement the sending, receiving or communicating function in the preceding method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the above description of embodiments may be a terminal (e.g., the first terminal in the aforementioned method embodiments), but the scope of the communication apparatus described in the disclosure is not limited thereto, and the structure of the communication apparatus is not limited by FIG. 11. The communication apparatus may be a stand-alone device or may be part of a larger device. For example, the described communication apparatus may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) a module that may be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

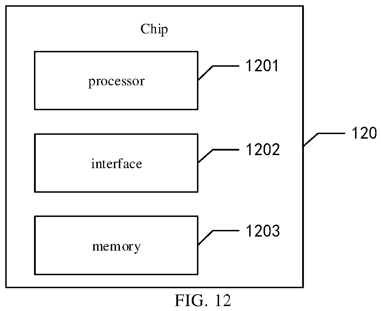

The case where the communication apparatus may be a chip or a chip system may be referred to the schematic diagram of a chip shown in FIG. 12. In FIG. 12, the chip 120 includes a processor 1201 and an interface 1202. There may be one or more processors 1201, and there may be a plurality of interfaces 1202.

If the chip is configured to realize the function of the terminal (e.g., the first terminal in the aforementioned method embodiments) in the embodiments of the disclosure,
the interface 1202 is configured to send a PSCCH/PSSCH,
and the processor 1201 is configured to, before sending a PSCCH/PSSCH, occupy a channel by a CPE and/or first information.

In an implementation, the processor 1201 is configured to occupy the channel by the CPE and/or first information by: determining a gap between a starting position of a PSCCH/PSSCH to be sent and an end position of a previous PSCCH/PSSCH; and occupying a channel in the gap by a CPE defined in a NR-U system and/or the first information.

In an implementation, the processor 1201 is configured to determine the gap between the starting position of the PSCCH/PSSCH to be sent and the end position of the previous PSCCH/PSSCH by: determining a gap between a transmission end position of a PSCCH/PSSCH in a slot and a transmission starting position of a PSCCH/PSSCH in another slot next to the slot, in which the PSCCH/PSSCH of the slot and the PSCCH/PSSCH of the other slot next to the slot are both sent by the first terminal.

In another possible implementation, the processor 1201 is configured to determine the gap between the starting position of the PSCCH/PSSCH to be sent and the end position of the previous PSCCH/PSSCH by: determining a gap between a starting position of a PSCCH/PSSCH to be sent by the first terminal and an end position of a PSCCH/PSSCH sent by a second terminal, in which the second terminal and the first terminal are different terminals that share the same COT.

In an optional implementation, the processor 1201 is configured to occupy the channel in the gap by the CPE defined in the NR-U system and/or the first information by: in response to the gap being less than a length of a target number of OFDM symbols, occupying a channel by the CPE or the first information; or in response to the gap being equal to a length of the target number of OFDM symbols, occupying a channel by the first information; or in response to the gap being greater than a length of the target number of OFDM symbols, occupying a channel by the CPE and the first information.

In an optional implementation, the processor 1201 is configured to occupy the channel by the CPE and the first information by dividing the gap into a first gap and a second gap, in which the first gap is less than the length of the target number of OFDM symbols, the second gap is greater than or equal to the length of the target number of OFDM symbols, and the second gap contains an integer number of OFDM symbols; occupying the channel by the CPE defined in the NR-U system in the first gap; and occupying the channel by sending the first information in the second gap.

In an optional implementation, the target number is 1.

In an optional implementation, the first information includes at least one of: a DMRS, a specific sequence, repeated data, or redundant data.

Optionally, the chip further includes a memory 1203 configured for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer programs on the computer, all or part of processes or functions described in the embodiments of the disclosure may be implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that may be understood by the communication device, and the values or representations of the parameters may be other values or representations that may be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The above are only specific implementations of the disclosure, but the scope of protection of the disclosure is not limited thereto. Those skilled in the art familiar to this technical field may easily think of changes or substitutions in the technical scope disclosed by the disclosure, which shall be covered by the scope of protection of the disclosure. Therefore, the scope of protection of the disclosure shall be governed by the scope of protection of the attached claims.

## Claims

1. A method for occupying a channel in an unlicensed spectrum, performed by a first terminal, comprising:
before sending a physical sidelink control channel (PSCCH)/physical sidelink shared channel (PSSCH), occupying a channel by a cyclic prefix extension (CPE) and/or first information.

2. The method of claim 1, wherein occupying the channel by the CPE and/or the first information, comprises:
determining a gap between a starting position of a PSCCH/PSSCH to be sent and an end position of a previous PSCCH/PSSCH; and
occupying a channel in the gap by a CPE defined in a new radio unlicensed (NR-U) system and/or the first information.

3. The method of claim 2, wherein determining the gap between the starting position of the PSCCH/PSSCH to be sent and the end position of the previous PSCCH/PSSCH, comprises:
determining a gap between a transmission end position of a PSCCH/PSSCH in a slot and a transmission starting position of a PSCCH/PSSCH in another slot next to the slot, wherein the PSCCH/PSSCH in the slot and the PSCCH/PSSCH in the other slot are both sent by the first terminal.

4. The method of claim 2, wherein determining the gap between the starting position of the PSCCH/PSSCH to be sent and the end position of the previous PSCCH/PSSCH, comprises:
determining a gap between a starting position of a PSCCH/PSSCH to be sent by the first terminal and an end position of a PSCCH/PSSCH sent by a second terminal, wherein the second terminal and the first terminal are different terminals that share the same channel occupancy time (COT).

5. The method of any one of claims 2-4, wherein occupying the channel in the gap by the CPE defined in the NR-U system and/or the first information, comprises:
in response to the gap being less than a length of a target number of orthogonal frequency division multiplexing (OFDM) symbols, occupying the channel by the CPE or the first information; or
in response to the gap being equal to a length of a target number of OFDM symbols, occupying the channel by the first information; or
in response to the gap being greater than a length of a target number of OFDM symbols, occupying the channel by the CPE and the first information.

6. The method of claim 5, wherein occupying the channel by the CPE and the first information, comprises:
dividing the gap into a first gap and a second gap, wherein the first gap is less than the length of the target number of OFDM symbols, the second gap is greater than or equal to the length of the target number of OFDM symbols, and the second gap contains an integer number of OFDM symbols;
occupying the channel by the CPE defined in the NR-U system in the first gap; and
occupying the channel by sending the first information in the second gap.

7. The method of claim 5 or 6, wherein the target number is 1.

8. The method of any one of claims 1-7, wherein the first information comprises at least one of:
a demodulation reference signal (DMRS), a specific sequence, repeated data, or redundant data.

9. A communication apparatus, comprising:
a transceiver module, configured to send a physical sidelink control channel (PSCCH)/physical sidelink shared channel (PSSCH); and
a processing module, configured to, before sending the PSCCH/PSSCH by the transceiver module, occupy a channel by a cyclic prefix extension (CPE) and/or first information.

10. The communication apparatus of claim 9, wherein the processing module is further configured to:
determine a gap between a starting position of a PSCCH/PSSCH to be sent and an end position of a previous PSCCH/PSSCH; and
occupy a channel in the gap by a CPE defined in a new radio unlicensed (NR-U) system and/or the first information.

11. The communication apparatus of claim 10, wherein the processing module is further configured to:
determine a gap between a transmission end position of a PSCCH/PSSCH in a slot and a transmission starting position of a PSCCH/PSSCH in another slot next to the slot, wherein the PSCCH/PSSCH in the slot and the PSCCH/PSSCH in the other slot are both sent by a first terminal.

12. The communication apparatus of claim 10, wherein the processing module is further configured to:
determine a gap between a starting position of a PSCCH/PSSCH to be sent by the first terminal and an end position of a PSCCH/PSSCH sent by a second terminal, wherein the second terminal and the first terminal are different terminals that share the same channel occupancy time (COT).

13. The communication apparatus of any one of claims 10-12, wherein the processing module is further configured to:
in response to the gap being less than a length of a target number of orthogonal frequency division multiplexing (OFDM) symbols, occupy the channel by the CPE or the first information; or
in response to the gap being equal to a length of a target number of OFDM symbols, occupy the channel by the first information; or
in response to the gap being greater than a length of a target number of OFDM symbols, occupy the channel by the CPE and the first information.

14. The communication apparatus of claim 13, wherein the processing module is further configured to:
divide the gap into a first gap and a second gap, wherein the first gap is less than the length of the target number of OFDM symbols, the second gap is greater than or equal to the length of the target number of OFDM symbols, and the second gap contains an integer number of OFDM symbols;
occupy the channel by the CPE defined in the NR-U system in the first gap; and
occupy the channel by sending the first information in the second gap.

15. The communication apparatus of claim 13 or 14, wherein the target number is 1.

16. The communication apparatus of any one of claims 9-15, wherein the first information comprises at least one of:
a demodulation reference signal (DMRS), a specific sequence, repeated data, or redundant data.

17. A communication apparatus, comprising a processor and a memory, wherein the memory stores a computer program, and when the processor executes the computer program stored in the memory, the apparatus is caused to execute the method of any one of claims 1-8.

18. A computer-readable storage medium for storing instructions, wherein when the instructions are executed, the method of any one of claims 1-8 is implemented.
